# FASCICULE DE BREVET EUROPEEN

(11) **EP 3 823 816 B1**
(45) Date de publication et mention de la délivrance du brevet: **14.02.2024**
(21) Numéro de dépôt: 19739293.9
(22) Date de dépôt: 16.07.2019
(51) Int. Cl.: B29C 65/16, B29C 65/78, B23K 26/00, B29C 65/44, B81C 3/00, B29K 705/00, B29K 709/08

(54) **SYSTÈME ET MÉTHODE DE MAINTIEN EN POSITION D'UNE PIÈCE POUR SON USINAGE ET/OU SON SOUDAGE PAR RAYONNEMENT LASER**
SYSTEM UND VERFAHREN ZUM HALTEN EINES WERKSTÜCKS IN EINER POSITION ZUM LASERBEARBEITEN UND/ODER SCHWEISSEN DES WERKSTÜCKS
SYSTEM AND METHOD FOR HOLDING A WORKPIECE IN POSITION FOR LASER MACHINING AND/OR WELDING THEREOF

(30) Priorité: 19.07.2018 BE 201805524
(43) Date de publication de la demande: 26.05.2021
(73) Titulaire: Laser Engineering Applications, 4102 Seraing (BE)
(72) Inventeur: DÉCULTOT, Marc, 4000 Liège (BE); HENROTTIN, Anne, 4990 Lierneux (BE); PATARS, Jérôme, 4500 Huy (BE); RAMOS DE CAMPOS, Jose-Antonio, 4031 Angleur (BE); KUPISIEWICZ, Axel, 4122 Neupré (BE)
(74) Mandataire: Gevers Patents
(86) Numéro de dépôt international: PCT/EP2019/069098
(87) Numéro de publication internationale: WO 2020/016217

(56) Documents cités:
- EP-B1- 1 508 069
- DE-A1- 3 621 030
- US-A1- 2012 211 154

## Description

### Domaine technique

Selon un premier aspect, l'invention se rapporte à un système pour maintenir en position une partie (ou cible, pièce) pour son exposition à un rayonnement laser. Selon un deuxième aspect, l'invention se rapporte à une méthode pour maintenir en position une partie (ou cible) pour son exposition à un rayonnement laser.

### Etat de la technique

La nécessité de maintien de pièces pour permettre leur usinage ou leur soudage est bien connu de l'homme du métier. Le maintien et/ou la mise en contact de pièces préalablement à leur usinage ou soudage est très souvent réalisé par des moyens permettant un serrage d'une ou de plusieurs pièces entre deux mors de serrage reliés mécaniquement aux moyens d'usinage ou de soudage.

L'usinage ou le soudage de pièces rigides et massives ne pose généralement pas de problèmes et des outils de serrages pour de telles pièces existent. Lorsqu'il est désiré de réaliser un usinage ou un soudage sur de plus petites pièces, des substrats flexibles ou des pièces souples il peut devenir problématique d'assurer un bon maintien avec une précision suffisante des pièces par rapport à un dispositif d'usinage sans endommager lesdites pièces par le serrage des mors.

L'usinage ou le soudage laser de pièces permet un usinage ou un soudage de précision sur de nombreux types de matériaux pouvant avoir des propriétés très variables. L'usinage ou le soudage laser de pièces nécessite un bon maintien d'une pièce par rapport au dispositif laser. Le soudage laser peut également nécessiter une bonne mise en contact de pièces entre elles.

US2011/200802 A1 décrit une méthode pour le soudage laser de matériaux transparents. Ce document décrit que des moyens de mise en compression peuvent être nécessaires pour maintenir un bon contact entre deux pièces à souder. Il est également proposé d'utiliser des moyens de mise en compression transparents lorsqu'ils couvrent une zone à souder. Le document US2012/211154 décrit un système de traitement de bande pour souder au laser au moins deux bandes continues. Le système comprend une station d'alimentation pour fournir les bandes et une station de stratification pour souder au laser les bandes ensemble. Le poste de laminage comprend une platine ayant une surface de platine entre ses extrémités avant et arrière à travers laquelle les bandes sont transportées et un appareil de soudage laser décalé de la surface de la platine et configuré pour diriger un faisceau laser vers ladite surface de la platine afin de souder au laser les bandes. Le document EP1508069 décrit des films optiques multicouches polymères et des corps stratifiés qui comprennent de tels films qui sont coupés ou subdivisés en un ou plusieurs morceaux discrets en appliquant de manière amovible une première et une seconde doublure sur les surfaces principales opposées du film optique multicouche. Un rayonnement laser est ensuite dirigé sur le film optique multicouche à travers le premier revêtement de manière à produire des lignes de découpe qui définissent une pluralité de morceaux du premier revêtement et du film optique multicouche. Ensuite, la pluralité de morceaux du premier revêtement sont retirés de la pluralité de morceaux du film optique multicouche tandis que les morceaux de film optique multicouche sont supportés par le second revêtement. L'application du premier revêtement sur le film optique multicouche peut être réalisée par électrostatisme. Le document DE3621030 décrit un procédé et un dispositif pour le soudage et/ou le découpage et le soudage sans contact de films plastiques ou de bandes de films plastiques au moyen d'un faisceau laser. Les films plastiques ou bandes de films plastiques à souder sont, avant soudage ou découpage et soudage, chacun chargé électrostatiquement séparément puis posés à plat l'un sur l'autre ou pressés l'un contre l'autre au moyen de jets de gaz linéaires.

Les dispositifs de maintien et de mise en contact de pièces à usiner de l'état de la technique ne permettent pas un bon maintien et/ou une bonne mise en contact des pièces à usiner tout en permettant un usinage ou un soudage laser bien précis sur toute la surface des pièces. En effet l'utilisation de moyens de mise en compression transparent ne permettent pas d'une part une bon dosage de la puissance du laser utilisée pour l'usinage et d'autre part une bonne précision de la position du faisceau laser d'usinage, à cause de la traversée du moyen de mise en compression transparent. Par ailleurs, la mise sous pression par exemple avec un système de piston peut également nuire à la soudure ou à sa qualité.

### Résumé de l'invention

Selon un premier aspect, un des buts de la présente invention est de proposer un système de maintien d'une ou plusieurs pièces permettant un usinage laser précis et de qualité. Un autre but de l'invention est de fournir un système de maintien de pièces permettant un usinage sur essentiellement toute leur surface.

A cet effet, les inventeurs proposent un système pour maintenir en position une partie et pour l'exposer à un rayonnement laser, tel que :
- ladite partie comprend :
   ∘ une surface inférieure de partie ;
   ∘ une surface supérieure de partie;
   ladite surface inférieure de partie et ladite surface supérieure de partie étant isolées électriquement l'une par rapport à l'autre ;
- ledit système comprenant :
   ∘ un premier dispositif générateur de charges électrostatiques pour générer des charges électrostatiques sur ladite surface supérieure de partie ;
   ∘ un support conducteur électrique pour former sur la surface inférieure de partie des charges électrostatiques de signes opposés à celles générées par ledit dispositif générateur de charges électrostatiques ;
   ∘ un dispositif laser pour usinage ou soudage de ladite partie par rayonnement laser ;
   ledit premier dispositif générateur de charges électrostatiques étant agencé pour être activé avant ou pendant l'usinage ou le soudage laser de ladite partie de sorte que ladite partie est maintenue en position par rapport audit support conducteur électrique lors de son exposition à un rayonnement laser. De préférence, la partie est maintenue immobile.

Le terme usinage laser devrait être compris comme décrivant de manière non-exhaustive : la brasure par laser, la découpe par laser, l'ablation de couche mince par laser, le perçage par laser, la micro-structuration par laser, la micro-texturation par laser, le marquage par laser, la gravure par laser... Le système de l'invention permet avantageusement l'usinage et/ou le soudage par laser.

Le système de l'invention permet d'appliquer à une partie comprenant au moins une pièce isolante électriquement des charges électrostatiques de signes opposées de part et d'autre de la partie et plus particulièrement de part et d'autre de l'au moins une pièce isolante.

De préférence, le système pour maintenir en position est également apte à et/ou configuré pour mettre en contact la partie avec le support conducteur électrique provoquant également le maintien en position.

Dans le cas où la partie comprend une seule pièce au total, la partie étant alors isolante électriquement, alors le premier dispositif générateur de charges électrostatiques permet de générer des charges sur une première surface de la première pièce et un support conducteur électriquement relié à la masse permettent de former des charges électrostatiques de signes opposés à celles générées par ledit dispositif générateur de charges électrostatiques sur la surface inférieure de partie de sorte à générer un très bon maintien de la pièce sur le support afin de permettre son usinage avec précision et sans endommagement de la pièce dû à son maintien.

De préférence, le support conducteur électrique est métallique, relié à la masse, et configuré pour recevoir ou supporter la partie, la surface inférieure de partie étant positionnée en contact mécanique, de préférence direct, avec le support conducteur électrique, de sorte que la partie et le support conducteur électrique s'attirent mutuellement lorsqu'ils sont chargés de façons opposées.

Le support conducteur, de préférence une plaque ou un support courbe conducteur électriquement étant relié à la masse, de sorte à permettre une accumulation de charges de signe opposé aux charges présentent sur la première surface se produit dans la plaque conductrice au niveau de la zone de contact avec la pièce/partie. Ainsi la présence de charges électrostatique de signe opposé sur la première surface de la pièce/partie et dans la plaque conductrice engendre une force d'attraction entre la pièce/partie et la plaque conductrice de sorte que cette force d'attraction permet le maintien de la première pièce/partie sur le support. En effet la force d'attraction générée par électrostatisme entre la pièce et le support peut être comparée à une force appliquée par compression comme décrit dans les documents de l'état de la technique. Le système de l'invention permet un bon maintien en contact de la pièce/partie et de la plaque conductrice ainsi qu'une bonne mise en contact de ces deux pièces en vue d'un usinage laser.

De préférence, le système comprend en outre des moyens de commande pour activer ledit premier dispositif générateur de charges électrostatiques avant ou pendant l'usinage ou le soudage laser de ladite partie pour la maintenir en position par rapport audit support conducteur électrique lors de son exposition à un rayonnement laser généré par ledit dispositif laser.

Dans le cas où la partie comprend deux pièces ou plus, alors les moyens électrostatiques sont soit une plaque conductrice, soit des rouleaux conducteurs, soit un deuxième dispositif générateur de charges électrostatiques. Dans toutes les configurations, le système de l'invention permet de créer une force d'attraction entre les deux pièces de sorte que les deux pièces se maintiennent en position l'une par rapport à l'autre et que les deux pièces décrivent un bon contact entre elles. Dans le cas où les deux pièces sont en contact d'une plaque conductrice alors les deux pièces et le support conducteur électriquement sont attirées entre eux de sorte à assurer un bon maintien des pièces sur la plaque conductrice et une bonne mise en contact des pièces entre elles, par exemple pour une application d'usinage par laser de type soudage, pour souder les deux pièces entre elles où un bon contact entre les deux pièces est nécessaire.

De préférence, le premier dispositif générateur de charges électrostatiques est apte à maintenir en position ladite partie sur ledit support conducteur électrique lors de son exposition à un rayonnement laser.

De façon générale, le système de l'invention permet un bon maintien d'une première pièce avec une deuxième pièce grâce à une bonne mise en contact des deux pièces entre elles. Une bonne mise en contact correspond à une surface de contact entre la première et la deuxième pièce la plus grande possible. Le système de l'invention permet une bonne mise en contact car les forces électrostatiques permettent une attraction mutuelle des première et deuxième pièces entre elles, ce qui permet aux pièces de se conformer plus facilement l'une par rapport à l'autre. Ainsi le bon contact entre les deux pièces, permet de générer des forces de frottement plus grandes lorsqu' une force de cisaillement entre les deux pièces est appliquée, expliquant par conséquent un bon maintien des deux pièces entre elles ou le bon maintien d'une ou plusieurs pièces sur le support conducteur électrique.

La pièce isolante ou un élément isolant compris dans la partie est de préférence un matériau diélectrique qui s'oppose au passage d'un courant électrique. La pièce isolante de la partie de l'invention est considérée comme isolante tant qu'elle n'est pas soumise à un champ électrique proche ou supérieur à un champ électrique de claquage du matériau isolant. La pièce isolante électriquement est prévue pour interdire le passage d'un courant électrique et de préférence pour interdire le passage d'un courant électrique entre la surface supérieure de partie et la surface inférieure de partie.

La pièce isolante peut comprendre plusieurs pièces isolantes, la pièce isolante est par exemple une feuille comprenant un matériau polymère, une plaque de verre ou de céramique...

Le système de l'invention est particulièrement bien adapté pour l'usinage par laser car c'est un usinage sans contact. En effet, un usinage avec une fraise, une soudure à l'arc, une abrasion nécessite un contact de la surface de la partie avec un outil. Un tel contact pourrait avoir comme conséquence le déchargement de l'une des surfaces de la partie de sorte que le maintien de la pièce ne soit plus assuré. Il a été observé que l'interaction entre le laser et la partie n'engendre pas de modification ou en tout cas des modifications négligeables concernant le maintien ou la mise en contact de la partie.

Plusieurs types de soudage peuvent être mis en oeuvre en utilisant le système de l'invention listée ci-après de manière non-exhaustive :
- soudure d'un substrat polymère transparent avec un autre substrat polymère transparent ;
- soudure d'un substrat polymère transparent avec un substrat polymère opaque ;
- soudure d'un substrat polymère transparent avec un substrat de verre transparent, le substrat de verre transparent pouvant être situé au-dessus ou en dessous du substrat polymère transparent par rapport à la source laser ;
- soudure d'un substrat de verre avec un substrat polymère opaque ;
- mise sous pression de plusieurs couches métallique et possibilité de faire en même temps une soudure entre un polymère transparent et un métal ;
- soudure d'un substrat polymère transparent avec un substrat métallique ;
- soudure d'un substrat polymère opaque avec un substrat métallique par conduction de l'énergie délivrée par le laser via le substrat métallique ;
- soudure d'un substrat polymère, verre, ... avec un matériau céramique ;
- soudure d'un substrat polymère sur un substrat tridimensionnel ;
- soudure entre un substrat transparent polymère avec un autre substrat polymère transparent et/ou avec un substrat métallique en utilisant un système de défilement par rouleau.

Le système de l'invention est particulièrement avantageux concernant la soudure de deux pièces entre elles car le système de l'invention permet d'imposer aux deux pièces de la partie un bon contact entre elles de sorte que la soudure à l'interface entre les deux pièces est très homogène. Ceci est possible grâce à une mise en contact qui est due à l'attraction mutuelle des deux pièces entre elles. Le système de l'invention est particulièrement bien adapté à des pièces ayant une certaine flexibilité, c'est-à-dire que la pièce peu se conformer à une autre pièce sans nuire à ses propriétés mécaniques. Le système est particulièrement avantageux lorsqu'au moins une pièce est flexible et est apte à se conformer à l'autre pièce rigide.

Le système de l'invention permet un très bon maintien en position d'une pièce sur un support ou d'une pièce sur une autre pièce de sorte que la pièce et le support ou les deux pièces soient maintenues en contact pendant l'usinage ou le soudage par laser.

Concernant le soudage, les systèmes de mise en contact actuels utilisant un piston et une plaque de mise sous pression, ces systèmes peuvent induire des problèmes d'homogénéité de la soudure dus entre autres à l'inhomogénéité de la pièce de mise sous pression. Pour éviter les problèmes dû à la plaque, alors, il est possible d'usiner à travers un trou, mais cela limite le champ d'usinage et pose des problèmes d'uniformité de la pression au niveau du trou. Dans le cadre des systèmes microfluidiques, les systèmes de mise en contact actuels utilisant un piston et une plaque de mise sous pression peuvent poser le problème suivant. La plaque de mise sous pression est généralement essentiellement plane, ce qui n'est pas toujours le cas de la surface en contact avec elle de l'échantillon (ou cible, ou partie). Il faut alors appliquer une force de pression relativement élevée pour obtenir un contact satisfaisant. L'application d'une telle force de pression relativement élevée peut induire une déformation, une détérioration, et/ou un remplissage des micro-canaux. Le système de l'invention, qui n'a pas besoin d'utiliser une plaque de mise sous pression, permet de pallier à ces problèmes de sorte à obtenir des soudures, en particulier en micro-fluidique de bonne qualité et avec un bon contrôle.

De plus les systèmes de maintien et de mise en contact de l'état de la technique nécessitent un contact avec les matériaux à souder ou à usiner et permettent difficilement de mettre en oeuvre le soudage ou l'usinage de surfaces courbes, problème que le système de l'invention permet de résoudre.

De préférence, la force de maintien ou de mise en contact peut être contrôlée en contrôlant le dispositif générateur de charges électrostatiques. De préférence, le premier dispositif générateur de charges électrostatiques est contrôlé par des moyens de commande. De préférence, les moyens de commande sont compris dans le système de l'invention.

De manière générale, plus l'espace entre les surfaces chargées est important, plus les forces générées entre les pièces situées entre les surfaces chargées vont être faibles. Une conséquence de cela est que plus l'écart entre les surfaces chargées est grand, plus la quantité de charge devra être importante pour assurer un bon maintien et/ou une bonne mise en contact.

Le système de l'invention est particulièrement avantageux pour l'assemblage de substrats, par exemple pour des applications en microfluidique ou des substrats comprenant des canaux nécessitent des soudures le long des canaux les plus nettes, reproductibles et qualitatives possible. Le système de l'invention permet d'assurer des soudures homogènes ayant des contours précis. Cela est particulièrement avantageux pour des applications en microfluidique car des microcanaux précédemment formés peuvent ne pas être trop modifiés par la soudure.

De préférence le support conducteur électrique est relié à la masse de manière indirecte, c'est-à-dire qu'une connexion directe au moyen d'un câble électrique n'est pas nécessaire mais qu'une connexion est indirectement obtenue grâce aux éléments en contact ou à proximité du support conducteur électrique.

De préférence, lesdits moyens sont des moyens de polarisation, de préférence des moyens de polarisation électrostatique.

De préférence, ladite partie comprend une première pièce, de préférence ladite partie comprend une première pièce et une deuxième pièce, de manière encore plus préférée ladite partie comprend une première pièce, une deuxième pièce et une troisième pièce. Néanmoins, ladite partie pourrait comprend plus de trois pièces. En particulier, elle pourrait comprendre quatre, cinq, six pièces ou plus.

De préférence, la première pièce comprend une surface inférieure de première pièce et une surface supérieure de première pièce;
- ladite deuxième pièce comprend une surface inférieure de deuxième pièce et une surface supérieure de deuxième pièce ;

ladite partie étant telle que ladite surface inférieure de deuxième pièce est positionnée essentiellement en contact mécanique de ladite surface supérieure de première pièce ;
ladite surface inférieure de première pièce étant ladite surface inférieure de partie et ladite surface supérieure de deuxième pièce étant ladite surface supérieure de partie.

De préférence, ladite première pièce est isolante électriquement.

De préférence, ladite deuxième pièce est isolante électriquement. S'il y a plus de deux pièces (quatre, cinq, six), chaque pièce additionnelle peut être isolante électriquement dans des variantes de l'invention.

De préférence, ledit dispositif générateur de charges électrostatiques est agencé pour être activé avant l'usinage ou le soudage desdites première et deuxième pièces par le dispositif laser (ou autre pièce additionnelle quand il y a au moins trois pièces).

De préférence, ladite première pièce (deuxième, troisième ou autre pièce additionnelle) est transparente ou opaque audit rayonnement laser issu dudit dispositif laser.

Une pièce transparente ou opaque est par exemple transparente ou opaque dans la plage de longueur d'ondes du visible. Transparent ou opaque dans le visible signifie qu'il est possible de voir ou de ne pas voir à travers la pièce. Par exemple une absorption moyenne dans le visible de 50% permet de voir à travers. Par exemple une absorption de 1 (ou 100 %) ne permet pas de voir à travers et définit donc une pièce opaque. Une pièce transparente ou opaque peut l'être dans une plage de longueur d'onde différente du visible. Par exemple une pièce est transparente ou opaque dans une plage de longueur d'onde correspondant à la longueur d'onde d'émission du rayonnement laser issu du dispositif laser. Par exemple la pièce est transparente ou opaque dans le proche infra-rouge NIR.

De préférence, ladite première pièce (deuxième, troisième ou autre pièce additionnelle) comprend au moins l'un des matériaux suivants : polymère, verre ou céramique.

De préférence, ledit dispositif générateur de charges électrostatiques est distant de ladite surface supérieure de partie pour générer des charges sans contact mécanique avec ladite surface supérieure de partie.

De préférence, lesdits moyens comprennent un support conducteur électrique, de préférence métallique relié à la masse et configuré pour recevoir ou supporter ladite partie, ladite surface inférieure de partie étant positionnée en contact mécanique, de préférence direct, avec ledit support conducteur, de sorte que ladite partie et ledit support conducteur électrique s'attirent mutuellement lorsqu'ils sont chargés de façons opposées.

De préférence, le support conducteur électrique est monté sur un système de déplacement, par exemple un système de déplacement selon 2 axes (X, Y), par exemple un système de déplacement selon 3 axes (X, Y, Z), par exemple un système de déplacement selon 5 axes, par exemple selon 7 axes.

De préférence, ladite première pièce comprend un matériau conducteur, de préférence un matériau métallique.

De préférence, ledit support conducteur électrique est une plaque plane, de préférence une plaque plane métallique.

Un plaque plane signifie qu'une surface de la plaque qui est destinée à entrer en contact avec ladite surface inférieure de première pièce est essentiellement inscriptible dans un plan.

De préférence, ladite première pièce est isolante électriquement et ladite deuxième pièce comprend un matériau conducteur électriquement.

De préférence, ladite surface supérieure de première pièce s'étend autour de ladite surface inférieure de deuxième pièce, de préférence ladite deuxième pièce est essentiellement centrée sur ladite première pièce.

De préférence, ladite surface inférieure de première pièce dont la surface est non-plane, de préférence courbe, et ledit support conducteur électrique comprend une surface non-plane, de préférence courbe, apte à entrer en contact mécanique avec ladite surface inférieure de première pièce .

De préférence, ladite surface supérieure de première pièce dont la surface est non-plane, de préférence courbe, et ladite surface inférieure de deuxième pièce comprend une surface non-plane, de préférence courbe, apte à entrer en contact mécanique avec ladite surface supérieure de première pièce, de préférence l'entièreté de ladite surface inférieure de deuxième pièce est apte à entrer en contact mécanique avec ladite surface supérieure de première pièce de sorte à être maintenue en position sur celle-ci.

De préférence, ledit support conducteur électrique est un rouleau métallique relié à la masse et configuré pour guider et/ou supporter ladite partie en entrant en contact mécanique avec ladite surface inférieure de partie.

De préférence, lesdits moyens comprennent un deuxième dispositif générateur de charges électrostatiques pour générer des charges électrostatiques sur ladite surface inférieure de partie de sorte à charger cette surface avec des charges opposées à celles chargées sur ladite surface supérieure de partie.

De préférence, ledit deuxième dispositif générateur de charges électrostatiques est distant de ladite surface inférieure de partie pour générer des charges sans contact mécanique avec ladite surface inférieure de partie.

De préférence, ladite partie comprend en outre :
- une troisième pièce comprenant une surface inférieure de troisième pièce et une surface supérieure de troisième pièce ;

ladite partie étant telle que ladite surface inférieure de troisième pièce est positionnée essentiellement en contact mécanique de ladite surface supérieure de deuxième pièce ;
ladite surface inférieure de première pièce étant ladite surface inférieure de partie et ladite surface supérieure de troisième pièce étant ladite surface supérieure de partie.

De préférence, ledit système comprend en outre des moyens de déplacer pour faire déplacer la partie entre lesdits premier et deuxième dispositifs générateurs de charges électrostatiques, de préférence ledit déplacement est synchronisé avec une utilisation dudit dispositif laser.

De préférence, ladite première pièce est un substrat en polymère transparent comprenant des canaux ayant au moins une dimension inférieure au micromètre, de préférence pour applications en microfluidique. Lesdits canaux peuvent avoir des dimensions supérieures au micromètre, à 10 micromètres ou à 100 micromètres. Par exemple, les canaux peuvent avoir des dimensions inférieures au millimètre, de préférence inférieur à 500 micromètres.

De préférence, la première pièce est un substrat comprenant un canal et en ce que la deuxième pièce est un substrat plan.

De préférence, une pièce (première, deuxième, troisième) est en copolymère ou en polymère de cyclo-oléfine (COC) ou (COP).

De préférence, une pièce a une épaisseur inférieure à 5 mm, de manière préféré inférieure à 2 mm, de manière encore plus préférée inférieure à 1 mm, par exemple inférieure à 500 µm. De préférence, une pièce à une épaisseur comprise entre 100 µm et 5 mm, de manière préféré comprise entre 200 µm et 2 mm, de manière encore plus préférée comprise entre 250 µm et 1 mm, par exemple comprise entre 250 µm et 750 µm.

De préférence, le dispositif laser est configuré pour émettre des impulsions picoseconde et femtoseconde. De préférence, le dispositif laser est configuré pour émettre des impulsions de durée comprise entre 10⁻¹⁵ s et 10⁻⁹ s, de manière plus préférée comprise entre 10⁻¹⁵ s et 10⁻¹⁰s, de manière encore plus préférée comprise entre 10⁻¹²s et 10⁻¹⁰s.

De préférence, une pièce à un module de Young supérieur à 1 GPa, de manière plus préférée supérieur à 2 GPa, de manière encore plus préférée supérieur à 3 GPa. Par exemple supérieur à 50 GPa. Un matériau ayant un tel module de Young supérieur à 1 GPa peut être considéré comme rigide.

L'avantage de l'invention est de pouvoir réaliser l'usinage ou le soudage d'une ou plusieurs pièces rigides avec une grande précision. En effet, grâce à l'absence de moyens de mise en compression pour maintenir une ou plusieurs pièces rigides par rapport au support conducteur électrique, il est possible de réaliser un usinage très fin et/ou une soudure avec un trait de soudure bien contrôlé spatialement. Un autre avantage du système et de la méthode de l'invention est de pouvoir usiner et/ou souder des pièces de toute taille sans avoir à ajuster des moyens de mise en compression. Ceci est particulièrement avantageux pour des pièces de petites taille. Des pièces de petite taille on une dimension maximale inférieure à 5 cm, de manière plus préférée inférieure à 2 cm. De telles pièces ne seraient pas usinables par une technique d'usinage par rouleaux (roll-to-roll) mais le sont grâce au système et à la méthode de l'invention.

De préférence, le système de l'invention comprend en outre un bras robotisé pour amener ladite partie au contact dudit support conducteur électrique.

Selon un autre mode de réalisation, le système de l'invention comprend en outre un tapis roulant pour amener ladite partie au contact dudit support conducteur électrique.

Selon un autre mode de réalisation ou en combinaison avec les deux modes de réalisation précités, le support conducteur électrique comprend des moyens de déplacement selon deux axes.

De préférence, ledit support conducteur électrique est de couleur noire. Le support conducteur électrique est noir pour permettre une bonne visualisation de la position de la partie lors de l'ajustement de la position du rayonnement laser sur la partie en vue de réaliser un usinage ou un soudage d'une partie essentiellement transparente.
Une configuration conducteur sur conducteur est possible lorsque celle-ci est prise en sandwich entre deux pièces dont au moins l'une des deux pièces est isolante électriquement. Il est donc possible d'utiliser la soudure avec l'électrostatisme pour toutes les combinaisons de matériau dans lesquelles au moins une des matières est non conductrice afin de pouvoir garder des charges statiques.

Par exemple, l'invention consiste à venir mettre en contact et à maintenir ce contact avec une barre ionisante, donc par électrostatisme, deux plaques de polymères transparents. Ensuite, une source laser femtoseconde (ou autre source laser) est utilisée pour venir souder les deux polymères transparents. L'invention permet de ne pas utiliser des moyens de mise sous pression classiques utilisant un piston afin de ne pas déformer les plaques de polymères et/ou d'éviter la présence d'une plaque transparente supplémentaire entre la tête scanner positionnée après la source laser et l'échantillon. Les charges électriques mises sur les plaques permettent d'atteindre un contact fort et proche entre les plaques polymères permettant la soudure par laser.

Les résultats obtenus avec le système de l'invention sont très bons, par exemple une soudure cohésive (donc lorsqu'on détache les deux plaques qui avaient été soudées, sur l'une d'elle, de la matière de l'autre plaque reste soudée) est observée de façon reproductible. La mise sous pression est également plus uniforme, ce qui n'est pas toujours possible avec les techniques standards de mise sous pression. Une application particulièrement bien adaptée est par exemple la microfluidique, car les soudures obtenues par le système de l'invention sont telles qu'un fluide ne les traverse pas, garantissant ainsi une bonne herméticité de la zone soudée, en particulier des canaux constituant un substrat microfluidique.

Le système de mise en contact inventé facilite également la mise sous pression entre des polymères de forme 3D. Le système de l'invention est donc un système de mise sous pression sans contact.

Dans le cas de l'utilisation du système pour le soudage, la visualisation de la qualité de la soudure peut être réalisée via un microscope optique, confocal, ou via des tests de traction et/ou des tests d'herméticité. Le système de l'invention est par ailleurs particulièrement bien adapté car il ne présente pas de plaque de mise en compression contrairement aux systèmes de l'état de la technique. En effet, pour les systèmes de l'état de la technique, la plaque du système de mise sous pression gêne la détection des pièces à usiner ou à souder, par exemple avec des caméras microscopiques (distance focale trop petite) ou avec des confocales (surface de la plaque de mise en compression détectée). De préférence le système de l'invention facilite la détection de l'échantillon, même après/pendant la mise sous pression.

De préférence, le système de l'invention permet de faire adhérer des surfaces non parfaitement planes, sans les déformer. De préférence le système de l'invention ne présentant pas de plaque de mise sous pression, il n'y a aucun risque d'endommagement de celle-ci.

Selon un deuxième aspect, un des buts de la présente invention est de proposer une méthode de maintien et/ou de mise en contact de pièces pour l'usinage laser permettant un usinage précis et de qualité. Un autre but de l'invention est de permettre un usinage sur essentiellement toute la surface d'une ou plusieurs pièces à usiner sans la contrainte des moyens de mise en compression mécaniques.

A cet effet, les inventeurs proposent une méthode pour maintenir en position une partie et pour l'exposer à un rayonnement laser, ladite partie comprenant :
o une surface inférieure de partie ;
o une surface supérieure de partie ;

ladite surface inférieure de partie et ladite surface supérieure de partie étant isolées électriquement l'une par rapport à l'autre ;
la méthode comprenant les étapes suivantes :
   a) fournir un système comprenant :
      ∘ un premier dispositif générateur de charges électrostatiques pour générer des charges électrostatiques sur ladite surface supérieure de partie ;
      ∘ un support conducteur électrique pour former des charges électrostatiques de signes opposés à celles générées par ledit dispositif générateur de charges électrostatiques sur ladite surface inférieure de partie;
      ∘ un dispositif laser pour usinage ou soudage laser de ladite ;
   b) positionner ladite partie sur ledit support conducteur électrique ;
   c) activer ledit premier dispositif générateur de charges électrostatiques pour générer des charges électrostatiques sur ladite surface supérieure de partie de sorte à former des charges électrostatiques de signes opposés à celles générées par ledit dispositif générateur de charges électrostatiques sur ladite surface inférieure de partie afin de maintenir en position ladite partie sur ledit support conducteur électrique ;
   d) irradier ladite partie avec ledit dispositif laser pour l'usinage ou le soudage laser, de préférence irradier ladite surface supérieur de partie.

Les variantes et avantages mentionnés pour le système selon le premier aspect de l'invention s'appliquent à la méthode suivant le deuxième aspect, *mutatis mutandis.*

De préférence, le support conducteur électrique est relié à la masse et est configuré pour recevoir ladite partie à usiner, ladite surface inférieure de partie étant positionnée en contact dudit support conducteur au moins partiellement, de sorte que ladite partie à usiner et ledit support conducteur s'attirent mutuellement à l'issue de l'étape c).

De préférence, ladite partie comprend :
- une première pièce comprenant une surface inférieure de première pièce et une surface supérieure de première pièce ;
- une deuxième pièce comprenant une surface inférieure de deuxième pièce et une surface supérieure de deuxième pièce ;

ladite partie est telle que ladite surface inférieure de deuxième pièce est positionnée essentiellement en contact mécanique de ladite surface supérieure de première pièce ;
ladite surface inférieure de première pièce étant ladite surface inférieure de partie et ladite surface supérieure de deuxième pièce étant ladite surface supérieure de partie.

De préférence, ladite première pièce est isolante électriquement.

De préférence, ladite deuxième pièce est isolante électriquement.

De préférence, ledit dispositif générateur de charge électrostatique est activé avant l'usinage desdites première et deuxième pièces.

De préférence, ladite première pièce est transparente ou opaque audit rayonnement laser issu dudit dispositif laser.

Dans un mode de réalisation préféré, ladite première pièce est un matériau conducteur, de préférence un matériau métallique.

De préférence, ladite première pièce est isolante électriquement et ladite deuxième pièce est conductrice électriquement.

De préférence, ledit support conducteur électrique est une plaque métallique plane.

Dans un mode de réalisation préféré, ladite première pièce est isolante électriquement et ladite deuxième pièce est conductrice électriquement.

De préférence, ladite surface inférieure de première pièce dont la surface est non-plane, de préférence courbe, et ledit support conducteur électrique comprend une surface non-plane, de préférence courbe, apte à entrer en contact mécanique avec ladite surface inférieure de partie (ou de première pièce), ledit premier dispositif générateur de charges électrostatiques est déplacé pendant l'étape c) au-dessus de ladite surface supérieure de partie sans contact mécanique de sorte à la charger sur essentiellement toute sa surface.

De préférence, ladite surface supérieure de première pièce dont la surface est non-plane, de préférence courbe, et ladite surface inférieure de deuxième pièce comprend une surface non-plane, de préférence courbe, apte à entrer en contact mécanique avec ladite surface supérieure de première pièce, de préférence l'entièreté de ladite surface inférieure de deuxième pièce est apte à entrer en contact mécanique avec ladite surface supérieure de première pièce de sorte à être maintenue en position sur celle-ci.

De préférence, ledit premier dispositif générateur de charges électrostatiques est déplacé de sorte à rester à une distance essentiellement constante de la dite surface supérieure de partie.

Un déplacement du premier dispositif générateur de charges électrostatiques au-dessus de la partie, permet d'assurer une polarisation homogène sur toute la surface de la partie et en particulier de la surface supérieure de la première pièce de sorte à générer une force de maintien en position la plus homogène et la plus reproductible possible. Cela présente l'avantage de permettre une mise en contact avec des forces au niveau de l'interface homogène entre la première et la deuxième pièce.

De préférence, ledit premier dispositif générateur de charges électrostatiques est déplacé au-dessus de ladite surface supérieure de partie avant d'initier l'usinage laser de l'étape d).

De préférence, ledit support conducteur électrique est un rouleau métallique relié à la masse et configuré pour guider et/ou supporter ladite partie en entrant en contact mécanique avec ladite surface inférieure de partie.

Dans un autre mode de réalisation ne faisant pas partie de l'invention, un deuxième dispositif générateur de charges électrostatiques est fourni tel que l'étape c) comprend en outre d'activer ledit deuxième dispositif générateur de charges électrostatiques pour générer des charges électrostatiques sur ladite surface inférieure de partie de sorte à charger cette surface avec des charges opposées à celles chargées sur ladite surface supérieure de partie. De préférence, ledit deuxième dispositif générateur de charges électrostatiques est distant de ladite surface inférieure de partie pour générer des charges sans contact mécanique avec ladite surface inférieure de partie.

De préférence, ladite partie comprend en outre :
- une troisième pièce comprenant une surface inférieure de troisième pièce et une surface supérieure de troisième pièce ;

ladite partie est telle que ladite surface inférieure de troisième pièce est positionnée essentiellement en contact de ladite surface supérieure de deuxième pièce ;
ladite surface inférieure de première pièce étant ladite surface inférieure de partie et ladite surface supérieure de troisième pièce étant ladite surface supérieure de partie.

Selon un autre mode de réalisation ne faisant pas partie de la présente invention, ladite partie comprend en outre des moyens de déplacer et en ce que ladite méthode comprend en outre l'étape additionnelle suivante :
e) déplacer la partie entre lesdits premier et deuxième dispositifs générateurs de charges électrostatiques de manière synchronisé avec l'utilisation du dispositif d'usinage laser de l'étape d).

De préférence, la méthode de maintien et/ou de mise en contact pourrait être adaptée et utilisée pour la soudure hybride entre un métal et un polymère, ou un polymère opaque à la longueur d'onde du faisceau laser et un polymère transparent à cette longueur d'onde ou encore entre deux plaques de verre. Une autre variante de la méthode de l'invention est l'utilisation d'autres sources lasers (durée d'impulsion ps, ns, CW, et différentes longueurs d'onde : 250nm jusque 12µm....). Pour la soudure hybride, une diode laser est suffisante, de même que pour la soudure entre un polymère opaque et un transparent. Il est également envisagé de charger les matériaux, avec d'autres appareils qu'une barre ionisante, par exemple une soufflerie ionisante.

De préférence, ladite première pièce est un substrat comprenant un canal et en ce que ladite deuxième pièce est un substrat plan, l'étape d) d'irradiation comprend l'irradiation de la partie, à l'interface entre ladite première et ladite deuxième pièce, sur les bords dudit canal pour former une soudure étanche entre ladite première et ladite deuxième sur les bords dudit canal afin de former un circuit microfluidique.

Selon un mode de réalisation ne faisant pas partie de l'invention, les inventeurs proposent un système pour maintenir en position une partie pour l'exposition à un rayonnement laser, tel que :
- ladite partie comprenant :
   ∘ une surface inférieure de partie ;
   ∘ une surface supérieure de partie;
   ladite surface inférieure de partie et ladite surface supérieure de partie étant isolées électriquement l'une par rapport à l'autre ;
- ledit système comprenant :
   ∘ un premier dispositif générateur de charges électrostatiques pour générer des charges électrostatiques sur ladite surface supérieure de partie ;
   ∘ des moyens pour former des charges électrostatiques de signes opposés à celles générées par ledit dispositif générateur de charges électrostatiques (de préférence, sur ladite surface inférieure de partie);
   ∘ un dispositif laser pour l'usinage ou le soudage de ladite partie par l'exposition audit rayonnement laser ;
   ledit dispositif générateur de charges électrostatiques étant agencé pour être activé avant ou pendant l'usinage ou le soudage de ladite partie de sorte que ladite partie est maintenue en position lors de l'exposition à un rayonnement laser. Les variantes et avantages des différents modes de réalisation de l'invention s'appliquent au présent mode de réalisation, *mutatis mutandis.*

### Brève description des figures

Ces aspects ainsi que d'autres aspects de l'invention seront clarifiés dans la description détaillée de modes de réalisation particuliers de l'invention, référence étant faite aux dessins des figures, dans lesquelles:
- la Fig.1 montre un mode de réalisation selon l'invention ;
- la Fig.2 montre un mode de réalisation selon l'invention ;
- la Fig.3 montre un mode de réalisation selon l'invention ;
- la Fig.4 montre un mode de réalisation selon l'invention ;
- la Fig.5 montre un mode de réalisation selon l'invention ;
- la Fig.6 montre un mode de réalisation selon l'invention ;
- la Fig.7 montre un mode de réalisation selon l'invention ;
- la Fig.8 montre un mode de réalisation ne faisant pas partie de l'invention.
Les dessins des figures ne sont pas à l'échelle. Généralement, des éléments semblables sont dénotés par des références semblables dans les figures. La présence de numéros de référence aux dessins ne peut être considérée comme limitative, y compris lorsque ces numéros sont indiqués dans les revendications.

### Description détaillée de certains modes de réalisation de l'invention

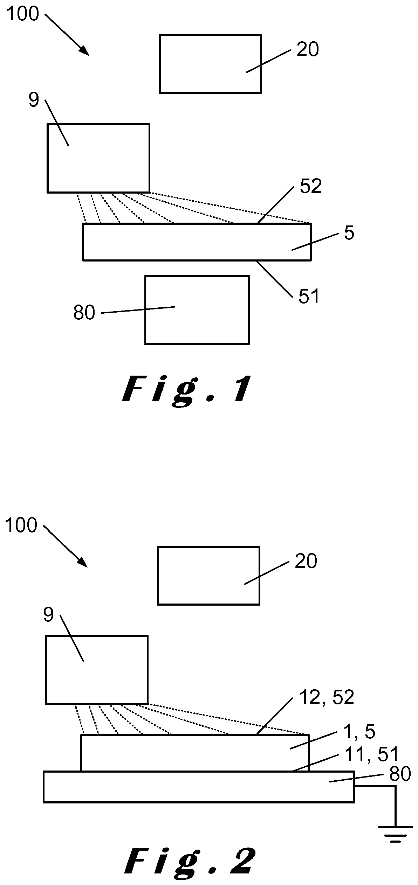

La figure 1 montre un exemple de mode de réalisation du système 100 selon l'invention où la partie 5 est positionnée entre le premier dispositif générateur de charges électrostatiques 9 et un support conducteur électrique 80, de préférence métallique, relié à la masse directement ou indirectement. Le support conducteur électrique 80 est configuré pour être positionné proche de la surface inférieure de partie 51. Par exemple le support conducteur électrique 80 est positionné à une distance comprise entre 1 mm et 10 mm. Par exemple la partie 5 est maintenue à cette distance par l'utilisation d'éléments de support pouvant être conducteur ou isolant électriquement. Ce mode de réalisation est particulièrement bien adapté pour ne pas endommager une surface inférieure de partie 51 qui serait fragile ou présentant un motif fragile. Ce mode de réalisation de l'invention peut également être utilisé avec une distance nulle entre la partie 5 et le support conducteur électrique 80. Le support conducteur électrique 80 est configuré pour recevoir ladite surface inférieure de partie 51 de sorte que le support conducteur électrique 80 et la partie 5 sont à portée électrostatique de sorte que l'activation du premier dispositif générateur de charges électrostatiques 9 permette une attraction mutuelle entre le support conducteur électrique 80 et la partie 5. Le dispositif laser 20 est positionné de sorte à émettre un rayonnement laser vers la surface supérieure de partie 52. Il peut être envisagé d'émettre un rayonnement laser vers la surface inférieure de partie 51. Ce mode de réalisation est particulièrement adapté à un système pour l'usinage de la partie 5 ou pour le soudage d'une partie comprenant au moins deux pièces 1, 2. Le premier générateur de charges électrostatiques 9 et le support conducteur électrique 80 permettent un bon contact entre les deux pièces 1, 2 de sorte qu'elles soient bien en contact lors de leur soudage par le rayonnement laser. Concernant l'usinage ou le soudage de la partie 5, un bon maintien sur le support conducteur électrique 80 est ainsi obtenu permettant une bonne précision d'usinage ou de soudage.

La figure 2 montre un exemple de mode de réalisation du système 100 selon l'invention où la partie 5 comprend la première pièce 1 entre le premier dispositif générateur de charges électrostatiques 9 et le support conducteur électrique 80, de préférence métallique, relié à la masse directement ou indirectement. Le support conducteur électrique 80 est configuré pour recevoir ou supporter la première pièce 1, ladite surface inférieure de première pièce 11 étant positionnée en contact mécanique, de préférence direct, avec le support conducteur 80, de sorte que la première pièce 1 et le support conducteur électrique 80 s'attirent mutuellement lorsqu'ils sont chargés de façons opposées. Le dispositif laser 20 est positionné de sorte à émettre un rayonnement laser vers la surface supérieure de première pièce 12. Il peut être envisagé d'émettre un rayonnement laser vers la surface inférieure de première pièce 11. Ce mode de réalisation est particulièrement adapté à un système pour l'usinage de la première pièce 1 de sorte que le système de l'invention 100 permet d'assurer un bon maintien en position de la première pièce 1 sur le support conducteur électrique 80 permettant ainsi une bonne précision d'usinage.

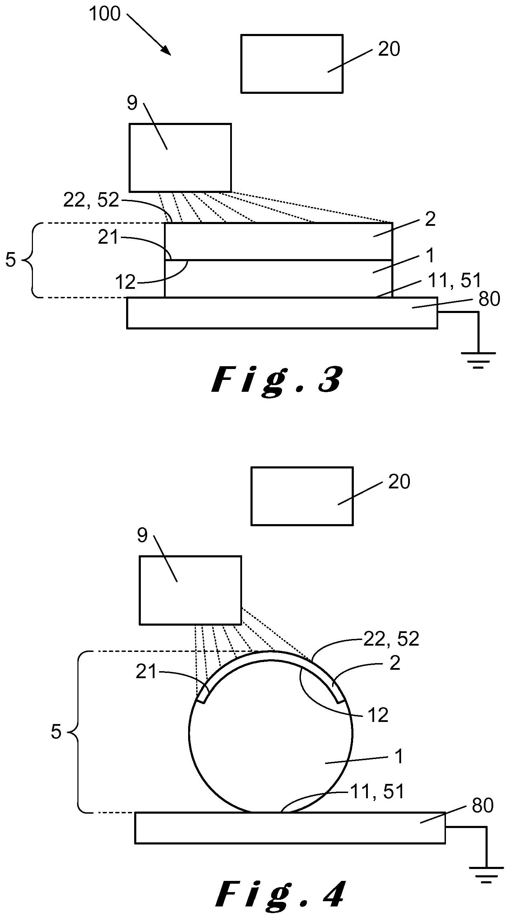

La figure 3 montre un exemple de mode de réalisation du système 100 selon l'invention où la partie 5 comprend la première pièce 1 et la deuxième pièce 2 de sorte que les première 1 et deuxième 2 pièces sont positionnées entre le premier dispositif générateur de charges électrostatiques 9 et le support conducteur électrique 80, de préférence métallique, relié à la masse directement ou indirectement. Le support conducteur électrique 80 est configuré pour recevoir ou supporter les première 1 et deuxième 2 pièces, la surface inférieure de première pièce 11 étant positionnée en contact mécanique, de préférence direct, avec le support conducteur 80. La surface supérieure de la deuxième pièce 22 est attirée par le support conducteur 80 car ils sont chargés de façon opposée. Le dispositif laser 20 est positionné de sorte à émettre un rayonnement laser vers la surface supérieure de deuxième pièce 22. Il peut être envisagé d'émettre un rayonnement laser vers la surface inférieure de première pièce 11 en utilisant un support conducteur électrique adapté. Ce mode de réalisation est particulièrement adapté à un système pour l'usinage ou pour le soudage des première 1 et deuxième 2 pièces. Le premier générateur de charges électrostatiques 9 et le support conducteur électrique 80 permettent un bon contact entre les première 1 et deuxième 2 pièces de sorte qu'elles soient bien en contact lors de leur soudage par le rayonnement laser. Cela permet en particulier une grande précision et une grande qualité de soudure. Un tel mode de réalisation est particulièrement bien adapté à des applications de circuits pour la microfluidique. Concernant l'usinage des première 1 et deuxième 2 pièces, un bon maintien sur le support conducteur électrique 80 est ainsi obtenu permettant une bonne précision d'usinage.

La figure 4 montre un exemple de mode de réalisation du système 100 selon l'invention où la partie 5 comprend la première pièce 1 et la deuxième pièce 2, la première pièce 1 ayant une surface supérieure de première pièce 12 non-plane, de préférence courbe ou par exemple en dent de scie. De préférence la deuxième pièce 2 positionnée en contact mécanique au niveau de sa surface inférieure 21 avec la surface supérieure de première pièce 12. Par exemple, la deuxième pièce 2 est rigide et sa surface inférieure 21 présente une morphologie analogue à celle de la surface supérieure de première pièce 12 de sorte à assurer un contact mécanique entre les deux pièces1, 2 aussi important que possible avant l'utilisation du système 100 de l'invention. Par exemple, la deuxième pièce est flexible de sorte qu'elle peut se conformer à la surface supérieure de première pièce 12. Une conformation de la deuxième pièce 2 à la morphologie de la surface supérieure de première pièce 12 est de préférence réalisée avec le système de l'invention qui permet d'imposer une attraction mutuelle entre les première 1 et deuxième 2 pièce de sorte à maximiser le contact entre la surface supérieure de première pièce 12 et la surface inférieure de deuxième pièce 21. Ce mode de réalisation illustre de façon générale que le système 100 de l'invention permet le maintien en position et/ou la mise en contact de pièces ayant des surfaces non-planes s'étendant dans les trois dimensions.

Dans le mode de réalisation de la Fig. 4, les première 1 et deuxième 2 pièces sont positionnées entre le premier dispositif générateur de charges électrostatiques 9 et le support conducteur électrique 80, de préférence métallique, relié à la masse directement ou indirectement. Le support conducteur électrique 80 est configuré pour recevoir ou supporter les première 1 et deuxième 2 pièces, la surface inférieure de première pièce 11 étant positionnée en contact mécanique, de préférence direct, avec le support conducteur 80. La surface supérieure de la deuxième pièce 22 est attirée par le support conducteur 80 car ils sont chargés de façon opposée. Le dispositif laser 20 est positionné de sorte à émettre un rayonnement laser vers la surface supérieure de deuxième pièce 22. Ce mode de réalisation est particulièrement adapté à un système pour l'usinage de ou pour le soudage des première 1 et deuxième 2 pièces. Le premier générateur de charges électrostatiques 9 et le support conducteur électrique 80 permettent un bon contact entre les première 1 et deuxième 2 pièces de sorte qu'elles soient bien en contact lors de leur soudage par le rayonnement laser.

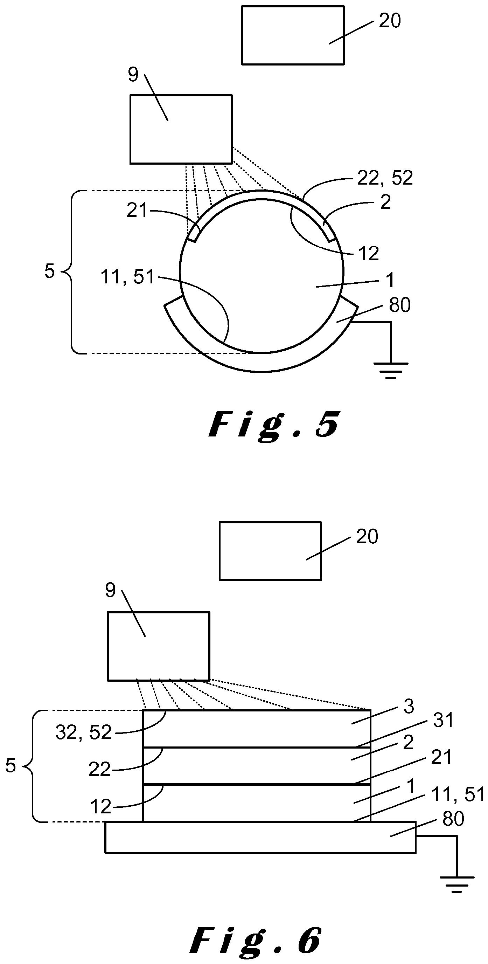

La figure 5 montre un mode de réalisation du système de l'invention reprenant toutes les caractéristiques du mode de réalisation de la Fig. 4 à l'exception du support conducteur électrique 80 qui dans le cas d'une partie 5 ou d'une pièce ayant une surface inférieure 51,11 non-plane, courbe ou en dent de scie, alors le support conducteur électrique 80 offre une surface de contact mécanique avec la surface inférieure 51,11 qui permette une augmentation de contact plus importante que lorsque le support conducteur électrique 80 est plan. De plus ce mode de réalisation de l'invention permet un calage de la partie 5 dans le cas d'une partie 5 sphérique, qui aura tendance à rouler ou à basculer. Avec le mode de réalisation de la Fig. 5, le support conducteur électrique 80 permet d'offrir un bon maintien aux première 1 et deuxième 2 pièces de sorte à assurer une bonne précision d'usinage et/ou de soudage.

La figure 6 montre un exemple de mode de réalisation du système 100 selon l'invention où la partie 5 comprend la première pièce 1, la deuxième pièce 2 et la troisième pièce 3 de sorte que les première 1, deuxième 2 et troisième 3 pièces sont positionnées entre le premier dispositif générateur de charges électrostatiques 9 et le support conducteur électrique 80, de préférence métallique, relié à la masse directement ou indirectement. Le support conducteur électrique 80 est configuré pour recevoir ou supporter les première 1, deuxième 2 et troisième 3 pièces, la surface inférieure de première pièce 11 étant positionnée en contact mécanique, de préférence direct, avec le support conducteur 80. La surface supérieure de deuxième pièce 22 est attirée par le support conducteur 80 car ils sont chargés de façon opposée. Le dispositif laser 20 est positionné de sorte à émettre un rayonnement laser vers la surface supérieure de troisième pièce 32. Il peut être envisagé d'émettre un rayonnement laser vers la surface inférieure de première pièce 11 en utilisant un support conducteur électrique 80 adapté. Ce mode de réalisation est particulièrement adapté à un système pour l'usinage ou pour le soudage des première 1 , deuxième 2 et troisième 3 pièces. Le premier générateur de charges électrostatiques 9 et le support conducteur électrique 80 permettent un bon contact entre les première 1 et deuxième 2 pièces de sorte qu'elles soient bien en contact lors de leur soudage par le rayonnement laser. Concernant l'usinage des première 1, deuxième 2 et troisième 3 pièces, un bon maintien sur le support conducteur électrique 80 est ainsi obtenu permettant une bonne précision d'usinage.

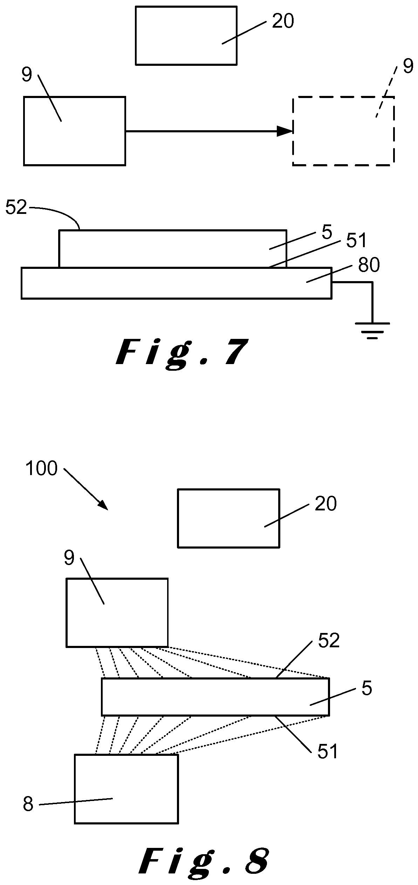

La figure 7 montre un mode de réalisation du système de l'invention correspondant par exemple aux modes de réalisation des Figs. 1b, 2, 3, 6 où le premier dispositif générateur de charges électrostatiques 9 est déplacé à distance de la surface supérieure de partie 52. Le premier dispositif générateur de charges électrostatiques 9 est déplacé essentiellement au-dessus de toute la surface supérieure de partie 52 de sorte à charger la surface supérieure de partie 52 (ou la surface supérieure de première pièce 12, de deuxième pièce 22, de troisième pièce 32) sur toute sa surface de sorte à générer une densité de charge sur la surface supérieure 52, 12, 22, 32 la plus homogène et la plus reproductible possible de sorte à assurer un bon maintien en position par rapport au support conducteur électrique 80. Lorsque plusieurs pièces sont comprises dans la partie 5 : deux pièces 1, 2 ; trois pièces 1, 2, 3 ;quatre pièces... , le fait de déplacer le premier dispositif générateur de charges électrostatiques 9 au-dessus de la surface supérieure de la pièce étant la surface supérieure de partie 52, l'homogénéité de la densité de charge à la surface 52 permet d'assurer un contact homogène entre les surfaces supérieures 12, 22, 32,...et inférieures 11, 21, 31,... des différentes pièces 1, 2, 3... en contact.

La figure 8 montre un exemple de mode de réalisation d'un système 100 ne faisant pas partie de l'invention où la partie 5 est positionnée entre le premier dispositif générateur de charges électrostatiques9 et le deuxième dispositif générateur de charges électrostatiques 8 de sorte que la surface inférieure de partie 51 et la surface supérieure de partie 52 puissent être chargées avec des charges de signe opposé. Le dispositif laser 20 est positionné de sorte à émettre un rayonnement laser vers la surface supérieure de partie 52. Il peut être envisagé d'émettre un rayonnement laser vers la surface inférieure de partie 51. Ce mode de réalisation est particulièrement adapté à un système pour le soudage de films par rouleaux, la partie 5 comprenant au moins deux pièces de film pouvant défiler entre les premier 9 et deuxième 8 générateurs de charges électrostatiques de sorte qu'un bon contact entre les deux pièces de film soient bien en contact lors de leur soudage par le rayonnement laser. Les deux pièces sont la première pièce 1 et la deuxième pièce 2. La surface supérieure de partie 52 est chargée par les charges électrostatiques générées par le premier dispositif générateur de charges électrostatiques 9.

La présente invention a été décrite en relation avec des modes de réalisations spécifiques, qui ont une valeur purement illustrative et ne doivent pas être considérés comme limitatifs. D'une manière générale, la présente invention n'est pas limitée aux exemples illustrés et/ou décrits ci-dessus. L'usage des verbes « comprendre », « inclure », « comporter », ou toute autre variante, ainsi que leurs conjugaisons, ne peut en aucune façon exclure la présence d'éléments autres que ceux mentionnés. L'usage de l'article indéfini « un », « une », ou de l'article défini « le », « la » ou « l' », pour introduire un élément n'exclut pas la présence d'une pluralité de ces éléments. Les numéros de référence dans les revendications ne limitent pas leur portée.

En résumé, l'invention peut également être décrite comme suit. Système 100 pour maintenir en position une partie 5 et pour l'exposer à un rayonnement laser, tel que :
- ladite partie 5 comprend une surface inférieure 51 et supérieure 52 isolées électriquement l'une par rapport à l'autre ;
- ledit système 100 comprenant :
   o un dispositif générateur de charges électrostatiques 9 pour générer des charges électrostatiques sur ladite surface supérieure 52 ;
   o un support conducteur électrique 80 pour former sur la surface inférieure 51 des charges électrostatiques de signe opposé à celles générées sur ladite surface supérieure 52 ;
   o un dispositif laser 20 pour usinage ou soudage 5 ;
   ledit dispositif générateur de charges électrostatiques 9 étant agencé pour être activé avant ou pendant l'usinage ou le soudage laser de sorte que ladite partie 5 est maintenue en position par rapport audit support conducteur électrique 80 lors de son usinage ou soudage.

## Revendications

1. Système (100) pour maintenir en position une partie (5) et pour l'exposer à un rayonnement laser, tel que :
- ladite partie (5) comprend :
o une surface inférieure de partie (51) ;
o une surface supérieure de partie (52) ;
ladite surface inférieure de partie (51) et ladite surface supérieure de partie (52) étant isolées électriquement l'une par rapport à l'autre ;
- ledit système (100) comprenant :
∘ un premier dispositif générateur de charges électrostatiques (9) pour générer des charges électrostatiques sur ladite surface supérieure de partie (52) ;
∘ un support conducteur électrique (80) pour former sur la surface inférieure de partie (51) des charges électrostatiques de signe opposé à celles générées par ledit dispositif générateur de charges électrostatiques (9) ;
∘ un dispositif laser (20) pour usinage ou soudage de ladite partie (5) par rayonnement laser ;
ledit premier dispositif générateur de charges électrostatiques (9) étant agencé pour être activé avant ou pendant l'usinage ou le soudage laser de ladite partie (5) de sorte que ladite partie (5) est maintenue en position par rapport audit support conducteur électrique (80) lors de son exposition à un rayonnement laser.

2. Système (100) selon la revendication précédente **caractérisé en ce qu'**il comprend en outre des moyens de commande pour activer ledit premier dispositif générateur de charges électrostatiques (9) avant ou pendant l'usinage ou le soudage laser de ladite partie (5) pour la maintenir en position par rapport audit support conducteur électrique (80) lors de son exposition à un rayonnement laser généré par ledit dispositif laser (20).

3. Système (100) selon l'une quelconque des revendications précédentes **caractérisé en ce que** ledit support conducteur électrique (80) est métallique, relié à la masse, et configuré pour recevoir ou supporter ladite partie (5), ladite surface inférieure de partie (51) étant positionnée en contact mécanique, de préférence direct, avec ledit support conducteur électrique (80), de sorte que ladite partie (5) et ledit support conducteur électrique (80) s'attirent mutuellement lorsqu'ils sont chargés de façons opposées.

4. Système (100) selon l'une quelconque des revendications précédentes **caractérisé en ce que** ladite partie (5) comprend une première pièce (1), de préférence ladite partie (5) comprend une première pièce (1) et une deuxième pièce (2), de manière encore plus préférée ladite partie comprend une première pièce (1), une deuxième pièce (2) et une troisième pièce (3).

5. Système (100) selon la revendication précédente **caractérisé en ce que** :
- ladite partie (5) comprend une première pièce (1) et une deuxième pièce (2) ;
- ladite première pièce (1) comprend une surface inférieure de première pièce (11) et une surface supérieure de première pièce (12) ;
- ladite deuxième pièce (2) comprend une surface inférieure de deuxième pièce (21) et une surface supérieure de deuxième pièce (22) ;
ladite partie (5) étant telle que ladite surface inférieure de deuxième pièce (21) est positionnée essentiellement en contact mécanique de ladite surface supérieure de première pièce (12) ;
ladite surface inférieure de première pièce (11) étant ladite surface inférieure de partie (51) et ladite surface supérieure de deuxième pièce (22) étant ladite surface supérieure de partie (52).

6. Système (100) selon l'une quelconque des deux revendications précédentes **caractérisé en ce que** ladite première pièce (1) est isolante électriquement.

7. Système (100) selon l'une quelconque des revendications 3 et 4 **caractérisé en ce que** ladite première pièce (1) comprend un matériau conducteur, de préférence un matériau métallique.

8. Système (100) selon l'une quelconque des quatre revendications précédentes **caractérisé en ce que** ladite partie (5) comprend une première pièce (1) et une deuxième pièce (2) et ladite deuxième pièce (2) est isolante électriquement.

9. Système (100) selon l'une quelconque des revendications 4 et 5 **caractérisé en ce que** ladite partie (5) comprend une première pièce (1) et une deuxième pièce (2),
ladite première pièce (1) est isolante électriquement et ladite deuxième pièce (2) comprend un matériau conducteur électriquement.

10. Système (100) selon l'une quelconque des six revendications précédentes **caractérisé en ce que** ladite première pièce (1) est transparente ou opaque audit rayonnement laser issu dudit dispositif laser (20).

11. Système (100) selon l'une quelconque des sept revendications précédentes **caractérisé en ce que** ladite première pièce (1) comprend au moins l'un des matériaux suivants : polymère, verre ou céramique.

12. Système (100) selon l'une quelconque des revendications précédentes caractérisé en que ledit dispositif générateur de charges électrostatiques (9) est distant de ladite surface supérieure de partie (52) pour générer des charges sans contact mécanique avec ladite surface supérieure de partie (52).

13. Système (100) selon l'une quelconque des revendications précédentes **caractérisé en ce que** ledit support conducteur électrique (80) est un rouleau métallique relié à la masse et configuré pour guider et/ou supporter ladite partie (5) en entrant en contact mécanique avec ladite surface inférieure de partie (51).

14. Système (100) selon l'une quelconque des revendications précédentes **caractérisé en ce que** ladite première pièce (1) est un substrat en polymère transparent comprenant des canaux ayant au moins une dimension inférieure au micromètre, de préférence pour applications en microfluidique.

15. Méthode pour maintenir en position une partie (5) et pour l'exposer à un rayonnement laser, ladite partie (5) comprenant :
- une surface inférieure de partie (51) ;
- une surface supérieure de partie (52) ;
ladite surface inférieure de partie (51) et ladite surface supérieure de partie (52) étant isolées électriquement l'une par rapport à l'autre ;
ladite méthode comprenant les étapes suivantes :
a) fournir un système (100) comprenant :
- un premier dispositif générateur de charges électrostatiques (9) pour générer des charges électrostatiques sur ladite surface supérieure de partie (52) ;
- un support conducteur électrique (80) pour former sur ladite surface inférieure de partie (51) des charges électrostatiques de signes opposés à celles générées par ledit dispositif générateur de charges électrostatiques (9) ;
- un dispositif laser (20) pour usinage ou soudage laser de ladite partie (5) ;
b) positionner ladite partie (5) sur ledit support conducteur électrique (80) ;
c) activer ledit premier dispositif générateur de charges électrostatiques (9) pour générer des charges électrostatiques sur ladite surface supérieure de partie (52) de sorte à former sur ladite surface inférieure de partie (51) des charges électrostatiques de signes opposés à celles générées par ledit dispositif générateur de charges électrostatiques (9) afin de maintenir en position ladite partie (5) sur ledit support conducteur électrique (80) ;
d) irradier ladite partie (5) avec ledit dispositif laser (20) pour l'usinage ou le soudage laser, de préférence irradier ladite surface supérieure de partie (52).

## Patentansprüche

1. System (100) zum Halten eines Teils (5) in Position, und um es einem Laserstrahl auszusetzen, derart, dass:
- der Teil (5) umfasst:
- eine untere Teilfläche (51);
- eine obere Teilfläche (52);
wobei die untere Teilfläche (51) und die obere Teilfläche (52) elektrisch in Bezug zueinander isoliert sind;
- wobei das System (100) umfass4t:
- eine erste Erzeugungsvorrichtung elektrostatischer Ladungen (9) zum Erzeugen elektrostatischer Ladungen auf der oberen Teilfläche (52);
- einen elektrisch leitenden Träger (80) zum Bilden der elektrostatischen Ladungen auf der unteren Teilfläche (51) mit umgekehrtem Vorzeichen zu jenen, die von der Erzeugungsvorrichtung elektrostatischer Ladungen (9) erzeugt werden;
- eine Laservorrichtung (20) zum Bearbeiten oder Schweißen des Teils (5) durch Laserstrahlung;
wobei die erste Erzeugungsvorrichtung elektrostatischer Ladungen (9) angeordnet ist, um vor oder während dem Laserbearbeiten oder dem Laserschweißen des Teils (5) aktiviert zu werden, sodass der Teil (5) bei seiner Aussetzung einer Laserstrahlung in Bezug auf den elektrisch leitenden Träger (80) in Position gehalten wird.

2. System (100) nach dem vorstehenden Anspruch, **dadurch gekennzeichnet, dass** es weiter Steuerungsmittel umfasst, um die erste Erzeugungsvorrichtung elektrostatischer Ladungen (9) vor oder während dem Laserbearbeiten oder dem Laserschweißen des Teils (5) zu aktivieren, um diesen bei seiner Aussetzung einer Laserstrahlung, die von der Laservorrichtung (20) erzeugt wird, in Bezug auf den elektrisch leitenden Träger (80) in Position zu halten.

3. System (100) nach einem der vorstehenden Ansprüche, **dadurch gekennzeichnet, dass** der elektrisch leitende Träger (80) metallisch ist, an die Masse angeschlossen ist, und konfiguriert ist, um den Teil (5) aufzunehmen oder zu tragen, wobei die untere Teilfläche (51) in mechanischem Kontakt, vorzugsweise direkt mit dem elektrisch leitenden Träger (80) positioniert ist, sodass sich der Teil (5) und der elektrisch leitende Träger (80) gegenseitig anziehen, wenn sie entgegengesetzt geladen sind.

4. System (100) nach einem der vorstehenden Ansprüche, **dadurch gekennzeichnet, dass** der Teil (5) ein erstes Werkstück (1) umfasst, der Teil (5) vorzugsweise ein erstes Werkstück (1) und ein zweites Werkstück (2), und der Teil noch bevorzugter ein erstes Werkstück (1), ein zweites Werkstück (2) und ein drittes Werkstück (3) umfasst.

5. System (100) nach dem vorstehenden Anspruch, **dadurch gekennzeichnet, dass**:
- der Teil (5) ein erstes Werkstück (1) und ein zweites Werkstück (2) umfasst;
- das erste Werkstück (1) eine untere Fläche des ersten Werkstücks (11) und eine obere Fläche des ersten Werkstücks (12) umfasst;
- das zweite Werkstück (2) eine untere Fläche des zweiten Werkstücks (21) und eine obere Fläche des zweiten Werkstücks (22) umfasst;
wobei der Teil (5) derart ist, dass die untere Fläche des zweiten Werkstücks (21) im Wesentlichen in mechanischem Kontakt mit der oberen Fläche des ersten Werkstücks (12) positioniert ist;
wobei die untere Fläche des ersten Werkstücks (11) die untere Teilfläche (51) ist und die obere Fläche des zweiten Werkstücks (22) die obere Teilfläche (52) ist.

6. System (100) nach einem der beiden vorstehenden Ansprüche, **dadurch gekennzeichnet, dass** das erste Werkstück (1) elektrisch isolierend ist.

7. System (100) nach einem der Ansprüche 3 und 4, **dadurch gekennzeichnet, dass** das erste Werkstück (1) einen leitenden Werkstoff, vorzugsweise einen metallischen Werkstoff umfasst.

8. System (100) nach einem der vier vorstehenden Ansprüche, **dadurch gekennzeichnet, dass** der erste Teil (5) ein erstes Werkstück (1) und ein zweites Werkstück (2) umfasst, und das zweite Werkstück (2) elektrisch isolierend ist.

9. System (100) nach einem der Ansprüche 4 und 5, **dadurch gekennzeichnet, dass** der Teil (5) ein erstes Werkstück (1) und ein zweites Werkstück (2) umfasst, wobei das erste Werkstück (1) elektrisch isolierend ist, und das zweite Werkstück (2) einen elektrisch leitenden Werkstoff umfasst.

10. System (100) nach einem der sechs vorstehenden Ansprüche, **dadurch gekennzeichnet, dass** das erste Werkstück (1) transparent oder intransparent für Laserstrahlung aus der Laservorrichtung (20) ist.

11. System (100) nach einem der sieben vorstehenden Ansprüche, **dadurch gekennzeichnet, dass** das erste Werkstück (1) mindestens einen der folgenden Werkstoffe umfasst: Polymer, Glas oder Keramik.

12. System (100) nach einem der vorstehenden Ansprüche, **dadurch gekennzeichnet, dass** die Erzeugungsvorrichtung elektrostatischer Ladungen (9) im Abstand zur oberen Teilfläche (52) ist, um Ladungen ohne mechanischen Kontakt mit der oberen Teilfläche (52) zu erzeugen.

13. System (100) nach einem der vorstehenden Ansprüche, **dadurch gekennzeichnet, dass** der elektrisch leitende Träger (80) eine metallische Walze ist, die an die Masse angeschlossen ist, und konfiguriert ist, um den Teil (5) zu leiten und/oder zu tragen, indem er in mechanischen Kontakt mit der unteren Teilfläche (51) tritt.

14. System (100) nach einem der vorstehenden Ansprüche, **dadurch gekennzeichnet, dass** das erste Werkstück (1) ein Substrat aus transparentem Polymer ist, welches Kanäle umfasst, die mindestens eine Abmessung kleiner als ein Mikrometer, vorzugsweise für Mikrofluid-Anwendungen aufweisen.

15. Verfahren zum Halten eines Teils (5) in Position, und um er einem Laserstrahl auszusetzen, wobei der Teil (5) umfasst:
- eine untere Teilfläche (51);
- eine obere Teilfläche (52);
wobei die untere Teilfläche (51) und die obere Teilfläche (52) elektrisch in Bezug zueinander isoliert sind;
wobei das Verfahren die folgenden Schritte umfasst:
a) Bereitstellen eines Systems (100), umfassend:
- eine erste Erzeugungsvorrichtung elektrostatischer Ladungen (9) zum Erzeugen elektrostatischer Ladungen auf der oberen Teilfläche (52);
- einen elektrisch leitenden Träger (80) zum Bilden der elektrostatischen Ladungen auf der unteren Teilfläche (51) mit umgekehrtem Vorzeichen zu jenen, die von der Erzeugungsvorrichtung elektrostatischer Ladungen (9) erzeugt werden;
- eine Laservorrichtung (20) zum Laserbearbeiten oder Laserschweißen des Teils (5);
b) Positionieren des Teils (5) auf dem elektrisch leitenden Träger (80);
c) Aktivieren der ersten Erzeugungsvorrichtung elektrostatischer Ladungen (9) zum Erzeugen der elektrostatischen Ladungen auf der oberen Teilfläche (52), um auf der unteren Teilfläche (51) elektrostatische Ladungen mit umgekehrten Vorzeichen zu jenen zu bilden, die von der Erzeugungsvorrichtung elektrostatischer Ladungen (9) erzeugt werden, um den Teil (5) auf dem elektrisch leitenden Träger (80) in Position zu halten;
d) Bestrahlen des Teils (5) mit der Laservorrichtung (20) für das Laserbearbeiten oder das Laserschweißen, vorzugsweise Bestrahlen der oberen Teilfläche (52).

## Claims

1. System (100) for holding a workpiece (5) in position and exposing it to a laser radiation, such that:
- said workpiece (5) comprises:
- a workpiece bottom surface (51);
- a workpiece top surface (52);
said workpiece bottom surface (51) and said workpiece top surface (52) being electrically insulated from each other;
- said system (100) comprising:
- a first electrostatic charge generating device (9) for generating electrostatic charges on said workpiece top surface (52);
- an electrically conductive support (80) for forming, on the workpiece bottom surface (51), electrostatic charges of opposite sign to those generated by said electrostatic charge generating device (9);
- a laser device (20) for machining or welding said workpiece (5) by laser radiation;
said first electrostatic charge generating device (9) being arranged to be activated before or during the laser machining or welding of said workpiece (5), such that said workpiece (5) is held in position relative to said electrically conductive support (80) during its exposure to a laser radiation.

2. System (100) according to the preceding claim, **characterized in that** it further comprises control means for activating said first electrostatic charge generating device (9) before or during the laser machining or welding of said workpiece (5), to hold it in position relative to said electrically conductive support (80) during its exposure to a laser radiation generated by said laser device (20).

3. System (100) according to any one of the preceding claims, **characterized in that** said electrically conductive support (80) is metallic, connected to the ground, and configured to receive or support said workpiece (5), said workpiece bottom surface (51) being positioned in mechanical contact, preferably direct, with said electrically conductive support (80), such that said workpiece (5) and said electrically conductive support (80) being mutually attracted when they are charged in opposite ways.

4. System (100) according to any one of the preceding claims, **characterized in that** said workpiece (5) comprises a first part (1), preferably said workpiece (5) comprises a first part (1) and a second part (2), even more preferably, said workpiece comprises a first part (1), a second part (2) and a third part (3).

5. System (100) according to the preceding claim, **characterized in that**:
- said workpiece (5) comprises a first part (1) and a second part (2);
- said first part (1) comprises a bottom surface of first part (11) and a top surface of first part (12);
- said second part (1) comprises a bottom surface of second part (21) and a top surface of second part (22);
said workpiece (5) being such that said bottom surface of second part (21) is positioned mainly in mechanical contact with said top surface of first part (12);
said bottom surface of first part (11) being said workpiece bottom surface (51) and said top surface of second part (22) being said workpiece top surface (52).

6. System (100) according to any one of the two preceding claims, **characterized in that** said first part (1) is electrically insulating.

7. System (100) according to any one of claims 3 and 4, **characterized in that** said first part (1) comprises a conductive material, preferably a metal material.

8. System (100) according to any one of the four preceding claims, **characterized in that** said workpiece (5) comprises a first part (1) and a second part (2) and said second part (2) is electrically insulating.

9. System (100) according to any one of claims 4 and 5, **characterized in that** said workpiece (5) comprises a first part (1) and a second part (2), said first part (1) is electrically insulating and said second part (2) comprises an electrically conductive material.

10. System (100) according to any one of the six preceding claims, **characterized in that** said first part (1) is transparent or opaque to said laser radiation coming from said laser device (20).

11. System (100) according to any one of the seven preceding claims, **characterized in that** said first part (1) comprises at least one of the following materials: polymer, glass or ceramic.

12. System (100) according to any one of the preceding claims, **characterized in that** said electrostatic charge generating device (9) is remote from said workpiece top surface (52) for generating charges without mechanical contact with said workpiece top surface (52).

13. System (100) according to any one of the preceding claims, **characterized in that** said electrically conductive support (80) is a metal coil connected to the ground and configured to guide and/or support said workpiece (5) by entering into mechanical contact with said workpiece bottom surface (51).

14. System (100) according to any one of the preceding claims, **characterized in that** said first part (1) is a transparent polymer substrate comprising channels having at least one dimension less than one micrometer, preferably for microfluid applications.

15. Method for holding a workpiece (5) in position and exposing it to a laser radiation, said workpiece (5) comprising:
- a workpiece bottom surface (51);
- a workpiece top surface (52);
said workpiece bottom surface (51) and said workpiece top surface (52) being electrically insulated from each other;
said method comprising the following steps:
a) providing a system (100) comprising:
- a first electrostatic charge generating device (9) for generating electrostatic charges on said workpiece top surface (52);
- an electrically conductive support (80) for forming, on the workpiece bottom surface (51), electrostatic charges of opposite sign to those generated by said electrostatic charge generating device (9);
- a laser device (20) for machining or welding said workpiece (5) by laser radiation;
b) positioning said workpiece (5) on said electrically conductive support (80);
c) activating said first electrostatic charge generating device (9) for generating electrostatic charges on said workpiece top surface (52), so as to form on said workpiece bottom surface (51), electrostatic charges of opposite signs to those generated by said electrostatic charge generating device (9), in order to hold said workpiece (5) in position on said electrically conductive support (80);
d) irradiating said workpiece (5) with said laser device (20) for machining or laser welding, preferably irradiating said workpiece top surface (52).
